# EUROPEAN PATENT SPECIFICATION

(11) **EP 4 455 017 B1**
(45) Date of publication and mention of the grant of the patent: **11.02.2026**
(21) Application number: 23170275.4
(22) Date of filing: 27.04.2023
(51) Int. Cl.: B64D 37/04, B64C 1/10, B64C 1/06, B64D 37/08, F17C 1/08

(54) **FUEL TANK FOR AIRCRAFT, PROCESSOR OF AIRCRAFT, AND AIRCRAFT**
KRAFTSTOFFTANK FÜR EIN FLUGZEUG, FLUGZEUGRUMPF UND FLUGZEUG
RESERVOIR A CARBURANT POUR AERONEF, FUSELAGE POUR AERONEF, ET AERONEF

(43) Date of publication of application: 30.10.2024
(73) Proprietor: Airbus Operations GmbH, 21129 Hamburg (DE)
(72) Inventor: LINDE, Peter, 21129 Hamburg (DE); TELKAMP, Michael, 21129 Hamburg (DE)
(74) Representative: Marschall, Stefan

(56) References cited:
- EP-A1- 4 112 478
- US-A- 3 951 362
- US-A- 3 979 005
- US-A1- 2004 129 836
- US-A1- 2007 194 051
- US-A1- 2023 107 610

## Description

The present invention concerns a fuel tank for an aircraft. The invention further relates to a fuselage of an aircraft, which fuselage comprises such fuel tank. Moreover, the invention concerns an aircraft with such fuselage.

Aircraft typically comprise one or more fuel tank/s containing a fuel to be supplied to the aircraft's one or more propulsion engines and possibly, if installed, to an auxiliary power unit as, e.g., a turboshaft engine and/or a fuel cell etc. Different positions are known for the tanks, depending on a respective type and designs of the aircraft.

Conventionally, the respective fuel may be an aviation gasoline or a jet fuel, for instance. In order to achieve a considerable emission reduction or even a zero emission, alternative propulsion systems for aircraft have been researched for. In this respect, hydrogen-electric aircraft engines, any propulsion engine, which includes piston engines, turbine engines of any architecture, and fuel cell powered electrical propulsion motors have emerged as a promising possibility, for instance. In particular, turbo fans and fuel cells/ electric engines respectively driven with hydrogen have been developed as aircraft engines. In either case, considerable space (volume) is needed, in the aircraft, for the hydrogen storage even in the liquid state thereof.

Therein, the liquid hydrogen may be carried in several tanks which in particular may be positioned in the wings or in a fuselage section of the aircraft. To minimize lost energy due to boil-off, however, a tank with a large capacity and an advantageous surface-to-volume ratio is advantageous. Such fuel tanks may be positioned in, e.g., the rear section of an aircraft's fuselage.

In document EP 4 112 478 A1, an integrated tank formed as a section of the fuselage is disclosed, wherein at least one portion of a tank wall of the tank is formed by a skin panel of the fuselage. A forward pressure bulkhead of the tank delimits the pressurized section(s) of the fuselage. Such tank provides for an advantageously reduced weight of the aircraft, in particular because a dedicated (further) pressure bulkhead separating the passengers' cabin from an advantageously unpressurised rear section of the fuselage can be omitted.

However, when liquid content in a large pressure vessel enclosing a single space becomes depleted, there is a risk of sloshing, as may occur when the vessel is moved hastily. The sloshing takes place in the form of inertia forces acting on the liquid, and it effects that a centre of gravity of the combined tank and liquid may move. In case of an aircraft's tank, where the hasty movement may occur during manoeuvring of the aircraft, large such moves are detrimental to a steering and control of the movement. To reduce them, conventional tanks are known which are segmented by anti-sloshing walls. Such anti-sloshing walls suppress an excessive amount of sloshing, as most of the liquid volume behind the walls will not transfer into the respective next segment.

From document US 2023/107610 A1, an onboard liquid hydrogen storage for a hydrogen aircraft is known. Document US 2007/194051 A1 discloses cellular tanks for storage of fluid at low temperatures. Document US 3 979 005 A relates to a cryogenic tank and to interface features between the interior and exterior of the tank and elements of a fuselage.

It is an object of the present invention to provide a technique facilitating an improved fuel storage in an aircraft.

The object is achieved by a fuel tank according to claim 1, a fuselage according to claim 10, and an aircraft according to claim 11. Advantageous embodiments are disclosed in the dependent claims, the description, and the figures.

A fuel tank according to the present invention is devised as a fuel tank of an aircraft. It may in particular be a liquid hydrogen tank, i.e., configured to contain liquified hydrogen (LH2).

The fuel tank, referred to herein also shortly as "tank" only, comprises two pressure bulkheads, which are connected to each other by a tank wall at least partially formed by a portion of a skin (thus, a shell) of a fuselage of the aircraft. Accordingly, the tank is integrated in the fuselage, and said portion of the skin has a multifunction. In particular, the bulkheads and said portion of the skin together may form a pressure vessel. As a consequence, one of the pressure bulkheads may serve to separate the interior space of the tank from a passengers' cabin of the aircraft.

Further to said portion of the skin, the tank wall may comprise an insulation layer (which may include a multi layer insulation (MLI), in particular a vacuumized MLI), which may serve to reduce disadvantageous temperature impacts on a liquid fuel the tank may contain. The insulation layer may be covered with an outer sheet the tank wall may further comprise, which outer sheet may serve as a protection of the insulation layer, e.g., against impacts of airstreams and/or mechanical stress. The tank wall of the fuel tank may include a conical portion and/or a cylindrical portion.

The fuel tank according to the present invention further comprises at least one anti-sloshing wall which is at least partially formed by a frame (structurally) stabilizing the skin and which at least partially encloses (respective) one or several opening/s. The one or several opening/s thus may include at least one opening enclosed by the at least one anti-sloshing wall alone and/or at least one opening which is enclosed by the at least one anti-sloshing wall in conjunction with at least one further component of the tank (such as a tank wall).

To get the correlations unambiguous, the frame forming part of a respective anti-sloshing wall is also referred to herein as the "belonging" frame of the anti-sloshing wall or the frame "belonging" to the respective anti-sloshing wall. However, if the relationship is clear, the attribute may also be omitted.

In particular, the fuel tank may comprise several anti-sloshing walls each at least partially being formed by a respective frame stabilizing the skin and each at least partially enclosing (respective) one or several opening/s. One or several of the several anti-sloshing walls may then have one or more (possibly different) of the features further described herein.

As the frame belonging to the respective anti-sloshing wall (i.e., the frame forming part thereof) also serves as a loadbearing component to stabilize the skin of the fuselage, it not only at least contributes to a reduction of sloshing in the tank, but also functions as a structural frame preserving a cross-sectional form of the fuselage (and the tank). In particular, the frame may form part of a fuselage skeleton stiffening and/or supporting the skin of the fuselage. It may be joined to one or several stringers. The frame thus has a multifunction. This facilitates a particularly lightweight configuration of the tank and yet an effective reduction of a liquid amount possibly contained in the tank that can freely move.

Moreover, the at least one anti-sloshing wall segments an inner space of the tank into compartments, wherein the one or several opening/s facilitate/s that liquid may flow, with a reduced flow rate, back and forth between the compartments. As a consequence, a continuous liquid level in the compartments can be achieved. According to advantageous embodiments, with respect to a designated orientation of the tank in the aircraft horizontally standing on the ground, at least one of the openings is positioned in a bottom region of the tank. This facilitates that even at a low tank level, a rest of a liquid contained in the tank can flow through the opening and thus can be accessed by a single pump/ fuel pick up device.

In particular, the one opening or at least one of the several openings may be configured as a clearance between the anti-sloshing wall (in particular, its belonging frame) and the skin. For instance, in cases where the frame belonging to the respective at least one anti-sloshing wall is attached to the skin in direct contact to it, such clearance may result from a cut-out which may be arranged in the frame.

Alternatively, the frame may be spaced away from the skin and fastened to it by means of one or more fastening elements such as clips and/or cleats. In this case, said clearance may be formed in particular by an interspace between the skin and the frame.

Additionally or alternatively, the one or several openings may comprise at least one hole which is fully encompassed by the at least one anti-sloshing wall. Such hole may preferably be arranged in a centre of the at least one anti-sloshing wall. For instance, such hole may be elliptic or rotationally symmetric (possibly, of finite order), in particular, it may be circular. The at least one anti-sloshing wall may preferably be ring-shaped.

According to advantageous embodiments of the present invention, at least one (in particular, exactly one) of the one or several opening/s has a size which will enable a human (in particular, a 95% US American male) to enter through the opening, e.g., for maintenance purposes. For example, at least one of the opening/s may preferably (geometrically) include a circular area having a diameter of at least 45cm or at least 50cm or at least 60cm (wherein, the opening may possibly exceed said circular area). Accordingly, the human can move, through the opening, from one compartment delimited by the at least one anti-sloshing wall into another such compartment. As a consequence, a number of entrances into the interior space of the tank can be reduced, which simplifies a construction of the tank, improves its safety and reduces its weight.

Preferably, the at least one such dimensioned opening may be in a centre of the anti-sloshing wall. If the tank comprises several all anti-sloshing walls, all of them may have at least one such sized opening. In particular, the tank preferably has a single entrance into its interior space only. Such entrance may preferably be positioned in the tank wall between the pressure bulkheads, so as to facilitate access into the interior space of the tank (i.e., the tank volume) from an environment of the aircraft.

Additionally or alternatively, at least one or each of the one or several opening/s may preferably have a diameter (being a largest occurring distance of two points of the opening's edge) of at most 80cm or at most 70cm or at most 65cm. This ensures a particularly effective anti-sloshing property of the at least one anti-sloshing wall. In particular, at least one (in particular, exactly one) of the opening/s may have a diameter in the range from 45cm to 80cm, or in the range from 50cm to 65cm.

Advantageously, the at least one anti-sloshing wall's opposite total surfaces (including the frame) each cover at least a half or at least three quarters of the tank's cross-sectional area along which the frame belonging to the anti-sloshing wall extends.

The at least one anti-sloshing wall may in particular run along an abstract (mathematical) plane. Such plane may be orthogonal to a designated flying direction of the aircraft.

The frame belonging to the at least one anti-sloshing wall and/or the skin portion and/or - in respective embodiments - one or more stringers preferably comprised by the tank may be at least partially made of a (respective or - preferably - same) thermoset fibre reinforced polymer, in particular a thermoset carbon fibre reinforced polymer, or of a (same or respective) metal. In these cases, the frame may be preferably attached to the skin portion and/or to the one or more stringers by bonding and/or riveting (in one or more rows). According to further embodiments, the frame belonging to the at least one anti-sloshing wall and/or the skin portion and/or - in respective embodiments - one or more stringers preferably comprised by the tank may be at least partially made of a (respective or - preferably - same) thermoplastic material, in which case the frame may be attached to the skin portion and/or to the stringer/s by welding.

According to advantageous embodiments, the at least one anti-sloshing wall comprises, further to its belonging frame, a wall portion which is attached to the belonging frame. In particular, at least 60% or at least 70% or at least 80% of a total surface dimension of the at least one anti-sloshing wall may be a surface of such wall portion. The wall portion may be monolithic or composed of several pieces. It may preferably be ring-shaped. In particular, it may be rotationally symmetric, with an axis of symmetry preferably running in a designated direction of flight of the aircraft.

Such embodiments provide the advantage that they improve the transportability of shell portions of the fuselage, e.g., for assembling the shell portions remotely from their fabrication location.

Indeed, the shell portions may comprise a respective section of the skin mounted (directly or spaced apart as mentioned above) to a respective section of the frame, while the wall portion of the at least one anti-sloshing wall may be attached to the frame after the transport, when the shell portions are or have been assembled together.

Just as the frame, to avoid ambiguity, the wall portion thus forming part of a respective anti-sloshing wall is also referred to herein as the "belonging" wall portion of the anti-sloshing wall or the wall portion "belonging" to the respective anti-sloshing wall. Again, if the relationship is clear, the attribute may also be omitted.

Preferably, in embodiments in which the at least one anti-sloshing wall comprises a belonging wall portion, a ratio of a coefficient of thermal expansion of the belonging frame divided by a coefficient of thermal expansion of the belonging wall portion is within the range of 0.9 to 1.1 or even in the range of 0.95 to 1.05. In particular, both said coefficients may preferably coincide. For instance, the belonging frame and the belonging wall portion may be made of the same material. Such compatibility of materials improves the durability of the anti-sloshing wall and simplifies attaching the wall portion to the frame.

For instance, the at least one anti-sloshing wall's wall portion and frame may be at least partially made of a (respective or - preferably - same) thermoset fibre reinforced polymer, in particular a thermoset carbon fibre reinforced polymer, or of a (same or respective) metal. In these cases, the wall portion may be preferably attached to the frame by riveting and/or bonding. According to further embodiments, the wall portion and the frame belonging to the at least one anti-sloshing wall may be at least partially made of a (respective or - preferably - same) thermoplastic material, in which case the wall portion may be attached to the frame by welding.

In particular, the wall portion belonging to the at least one anti-sloshing wall may be attached to the belonging frame in the same way as the belonging frame is attached to the skin and/or to one or more stringers further comprised by the tank.

The at least one anti-sloshing wall advantageously complies with the crash load certification requirements set out by the certification bodies. In particular, it may preferably withstand at least a g-force to be determined of the certification body. For example, it may advantageously withstand at least 9g or at least 12g or at least 16g forward crash. According to advantageous embodiments, the at least one anti-sloshing wall may preferably withstand sloshing load cases of at least 9g or at least 12g or at least 16g.

Additionally or alternatively, the frame belonging to the at least one anti-sloshing wall may preferably withstand an inner fuselage pressure of at least 2bar, and/or an inner tank pressure up to 3bar or even up to 5bar.

These properties may be achieved by way of optimisation (as known in the art) for sizing and/or shaping the at least one anti-sloshing wall (in particular its belonging frame), for dimensioning and/or positioning the one or several openings, for selecting attachment means (in particular, an attachment procedure) for attaching the frame to the skin, and/or - if applicable, i.e., in respective embodiments - for sizing and/or shaping the at least one anti-sloshing wall's belonging wall portion, and/or for selecting attachment means (in particular, an attachment procedure) for attaching the wall portion to the frame. In such optimisation/s, one or several parameters may be taken into account, such as one or more dimensions of the tank (e.g., its diameter and/or its volume), involved materials, a number and/or respective positions of frames supporting the skin comprised by the tank wall, a number and/or respective positions of stringers further stabilizing the skin, and/or - in respective embodiments - a size of the at least one anti-sloshing wall, and/or a number of and/or respective designs of anti-sloshing walls arranged within the tank, for instance.

In particular, the belonging frame may be constructed with at least one fastening flange for connection of the frame to the skin. Such fastening flange may preferably be sized to support the at least one anti-sloshing wall, so as to withstand said sloshing cases and/or forward crash. Additionally or alternatively, the anti-sloshing wall may be stabilized by means of one or more clip/s joined to both the skin and the belonging frame. Such clip/s may further connect the frame to one or more stringer of the tank. The clip/s may be shaped and sized so as to ensure said withstanding of the anti-sloshing wall and/or of the frame. In embodiments where the at least one anti-sloshing wall comprises a belonging wall portion as mentioned above, the clip/s may further extend along the belonging wall portion, and preferably joined thereto. Thereby, the at least one anti-sloshing wall may be further stabilized.

According to advantageous embodiments, the at least one anti-sloshing wall comprises one or several stabilizing flange/s which freely project/s into the interior space of the tank (i.e., the tank volume).

Such stabilizing flange may provide further stability of the at least one anti-sloshing wall. It may comprise a bent rim of the frame belonging to the at least one anti-sloshing wall, which rim in particular may be formed at a side of the frame facing away from the tank wall. Additionally or alternatively, in embodiments where the at least one anti-sloshing is further formed by a belonging wall portion attached to the frame, the stabilizing flange or - if applicable - at least one of the stabilizing flanges may comprise a bent rim of the wall portion. Such rim in particular may be formed at a side of the wall portion facing away from the tank wall and/or at a side of the wall portion facing towards the tank wall.

If the at least one frame is connected to said portion of the skin by means of at least one fastening flange as mentioned above, the stabilizing flange may protrude from an intermediate portion of the frame in a same direction as the at least one fastening flange and/or in the opposite direction.

A fuselage according to the present invention belongs to an aircraft and comprises a tank according to an embodiment of the present invention. In particular, the tank thus is structurally integrated in the fuselage. Therein, one of the pressure bulkheads of the tank may preferably separate the interior space of the tank from a passengers' cabin of the aircraft. Thereby, an unpressurised section may be formed in a rear space (with respect to a designated direction of flight) of the fuselage, in particular, behind the tank, without needing a further pressure bulkhead. Accordingly, the aircraft can be built with a reduced weight and with less construction effort and material consumption.

An aircraft according to the present invention has a fuselage which is in accordance to an embodiment of the present invention. As is to be understood, the aircraft further has at least one engine. According to advantageous embodiments, the tank is a liquid hydrogen tank, and the aircraft comprises, as the at least one engine, a hydrogen fuel burn turbo fan and/or a hydrogen powered fuel cell/electrical engine.

Preferably, the aircraft comprises at least one fuel cell stack, which may be positioned in an aft electronics bay. Such fuel cell stack/s may make a usually larger auxiliary power unit (APU) in the rear space (i.e., in the space which in a designated flying direction is behind the tank) of the fuselage dispensable. In particular, the aircraft according to the present invention may be void of any auxiliary power unit in its rear space. As a consequence, a smaller rear space is needed, such that the tank can be positioned closer to the aircraft's empennage than conventionally. This facilitates the advantages of a larger passengers' cabin, a smaller diameter of the rear pressure bulkhead and a smaller diameter of at least one of the anti-sloshing wall/s in the tank.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure.

Shown is schematically in
- Fig. 1a:: an aft portion of an exemplary fuselage according to an exemplary embodiment of the present invention, in a longitudinal sectional view;
- Fig. 1b a: perspective partial cutaway view of the aft portion shown in Figure 1a;
- Fig. 1c:: an illustration of an aircraft according to an embodiment of the present invention, comprising the fuselage partially shown in Figure 1b;
- Fig. 2:: a detail of an anti-sloshing wall of a tank according to an exemplary embodiment of the present invention; and
- Fig. 3:: a detail of an alternative anti-sloshing wall of a tank according to an exemplary embodiment of the present invention.

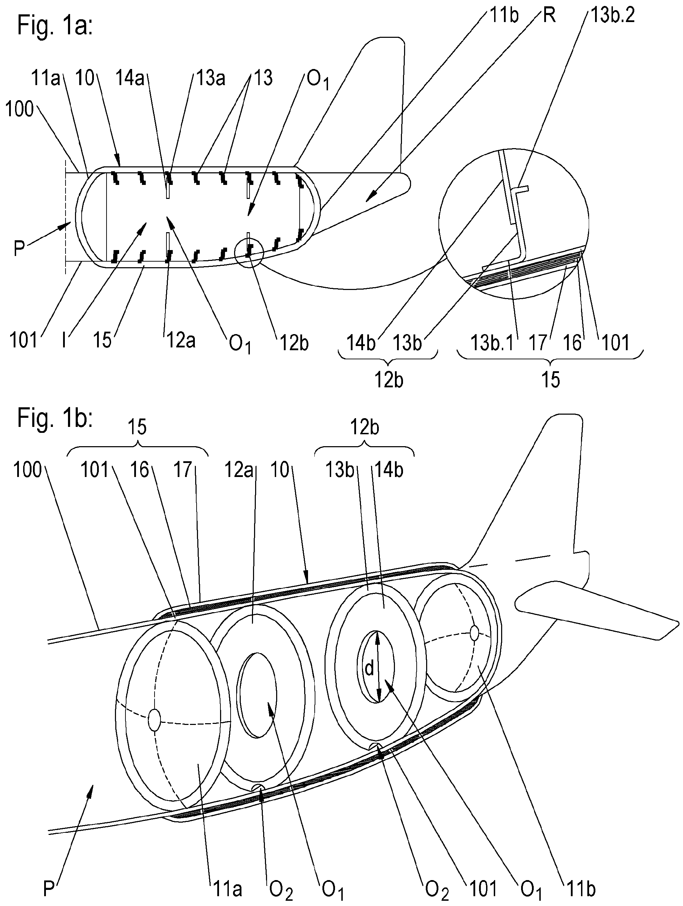

In Figure 1a, an aft portion of a fuselage 100 according to the present invention, having integrated therein a tank 10 according to an exemplary embodiment of the present invention, is shown in a longitudinal sectional view.

The tank 10 encloses an interior space I configured to contain a fuel which in the present case may be liquid hydrogen (not shown). A first pressure bulkhead 11a of the tank 10 separates the interior space I from a passengers' cabin P, and a second pressure bulkhead 11b, which is positioned opposite to the first pressure bulkhead 11a, separates the interior space I from a rear space R in the fuselage 100. The first and second pressure bulkheads 11a, 11b are connected to each other by a tank wall 15 which is partially formed by a portion of a skin 101 of the fuselage. Therewith, an inner pressure vessel of the tank 10 is formed.

As a consequence, said portion of the skin 101 has a multiple function, as it not only serves to encase the respective portion of the fuselage but also to contribute to forming the tank. A dedicated tank wall thus can be at least partially omitted, which facilitates a reduction of weight of the respective aircraft.

Moreover, no further pressure bulkhead is needed to separate the passengers' cabin P, which during flight has to be pressurised, from the rear space which preferably remains unpressurised. The omission of such further pressure bulkhead implies a further weight reduction of the aircraft.

In the embodiment depicted, as seen in the explaining magnification provided in Figure 1a, the tank wall 15 further comprises an insulation layer 16, which preferably comprises a multilayer insulation (MLI), and an outer sheet 17 which may serve as a protection of the insulation layer 16, e.g., against impacts of airstreams and/or mechanical stress.

The exemplary tank 10 depicted in Figure 1a further comprises two anti-sloshing walls 12a, 12b, each of which comprises a belonging (thus, respective) frame 13a, 13b and, attached thereto, a belonging wall portion 14a, 14b. Further to forming part of the respective anti-sloshing wall 12a, 12b, the frames 13a, 13b also serve to stabilize the skin 101, as do further frames 13 (of which only two are referenced in the figure). The frames 13a, 13b, 13 are fastened to the skin by means of respective fastening flanges, and they further each comprise a stabilizing flange freely projecting into the interior space I of the tank 10. For instance, as detailed in the explaining magnification, the frame 13b of the anti-sloshing wall 12b has a fastening flange 13b.1, by which it is fastened (e.g., bonded, riveted or welded, depending on the materials as mentioned above) to the skin 101, and it has a stabilizing flange 13b.2 which stabilizes the frame 13b and, therewith, the anti-sloshing wall 12 the frame 13b belongs to. In the exemplary embodiment shown, the fastening flange 13b.1 and the stabilizing flange 13b.2 protrude at opposite sides of the frame 13b.

The anti-sloshing walls 12a, 12b further each at least partially enclose one or several openings. In Figure 1a, a respective centre opening O₁ fully enclosed by the respective anti-sloshing wall 12a, 12b is discernible; in particular, the wall portions 14a, 14b belonging to a respective one of the anti-sloshing walls 12a, 12b are ring-shaped, as can be better seen in Figure 1b, which provides a three-dimensional view of the tank 10 (in simplified representation) in a cutaway picture of the aft portion of the fuselage 100.

In Figure 1b, it can be further seen that each anti-sloshing wall 12a, 12b also partially (namely, together with the skin 101) encloses a respective further opening O₂, which in this case is configured as a clearance formed between the respective at least one anti-sloshing wall 12a, 12b and the skin 101 of the fuselage 100.

As can be taken from Figure 1b showing the tank 10 in a designated orientation when the aircraft containing the tank horizontally stands on the ground, the openings O₂ are positioned in a bottom region of the tank 10; in particular, a respective deepest edge of the respective frames 13a, 13b is cut out. As a consequence, even at a low tank level, a rest of a liquid contained in the tank 10 can flow through the openings and thus can be accessed by a single pump.

The openings O₁ in the anti-sloshing walls 12a, 12b preferably serve to let a person or a respective tool pass through, such as for inspection, repair and/or cleaning purposes. As a consequence, the tank 10 may have only a single entrance (not shown) into its interior space I, such that additional weight can be avoided.

In particular, as referenced in Figure 1b for the anti-sloshing wall 12b, the opening O₁ thereof, which in this case is circular, has a diameter d. The length of this diameter d may advantageously be at least 45cm or at least 50cm or at least 60cm, allowing a person to pass the opening. To ensure an advantageous anti-sloshing effect of the anti-sloshing wall 12b, the diameter d preferably is at most 80cm or at most 70cm or at most 65cm.

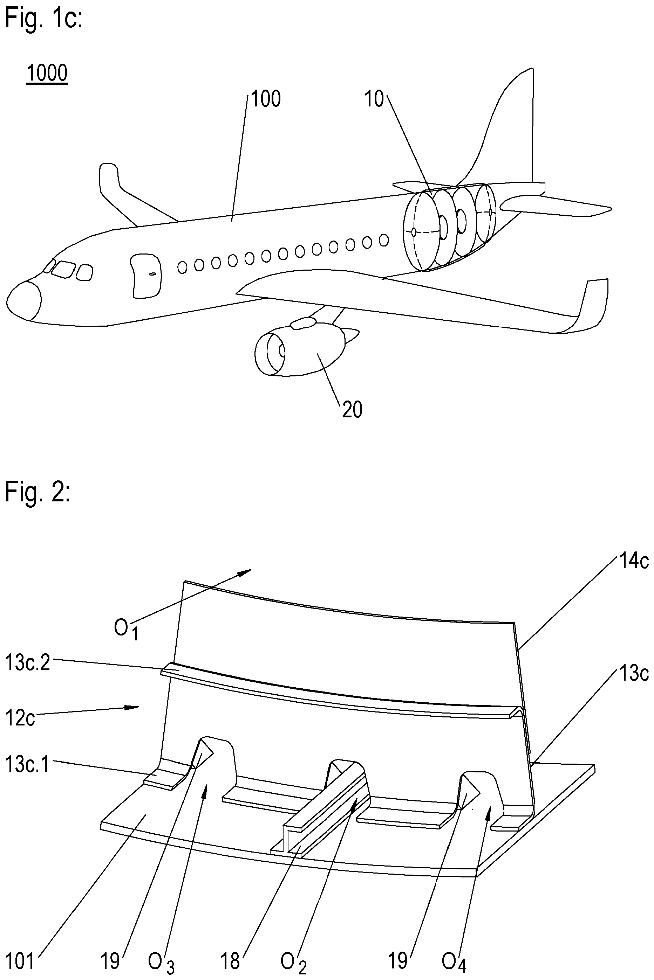

Figure 1c provides a partial insight into an aircraft 1000 according to an exemplary embodiment of the present invention, the aircraft 1000 comprising the fuselage 100 and the tank 10 integrated therein. The aircraft 1000 further comprises two engines 20 (only one of which is visible due to the perspective), which may be a hydrogen fuel burn turbo fan to be fed with liquid hydrogen from the tank 10.

A representation of further features the tank 10 may possibly comprise is omitted in Figures 1a - 1c for clarity purpose. Such further features may comprise one or more tube/s (e.g., for filling the tank, for supplying the liquid that it contains to an engine, and/or for venting), and/or at least one heating and/or one or multiple stringer/s stabilizing the skin and/or at least one entrance into the interior space I of the tank 10.

Figure 2 illustrates a further embodiment of a tank according to the present invention, by showing a sector portion thereof, including an anti-sloshing wall 12c and a skin 101 of an aircraft's fuselage, wherein the skin is stabilized (in particular) by a frame 13c forming part of the anti-sloshing wall 12c and by a stringer 18. As is to be understood, the skin may be stabilized by further frames and stringers not included in the sector portion shown in Figure 2.

Further to the frame 13c, the anti-sloshing wall 12c comprises a wall portion 14c attached to the frame 13c. The frame 13c comprises a fastening flange 13c.1, by means of which it is fastened to the skin 101, and a stabilizing flange 13c.2 which freely projects into the interior space of the tank. The stabilizing flange 13c.2 stabilizes the frame 13c and, therewith, also the anti-sloshing wall 12c. In the instance illustrated in Figure 2, the fastening flange 13c.1 and the stabilizing flange 13c.2 protrude at the same side of the anti-sloshing wall 12c.

The anti-sloshing wall 12c is further stabilized by means of clips 19 joined to both the skin 101 and the frame 13c (opposite to the fastening flange 13c.1 thereof). Due to the perspective, only a respective part of the clips 19 is visible, namely through openings O₂, O₃, O₄ which each are enclosed by the anti-sloshing wall 12c in conjunction with the skin 101. In particular, the openings O₂, O₃, O₄ each are formed as a respective clearance between the anti-sloshing wall 12c and the skin 101. In the embodiment shown in Figure 2, the stringer 18 runs through the opening O₂.

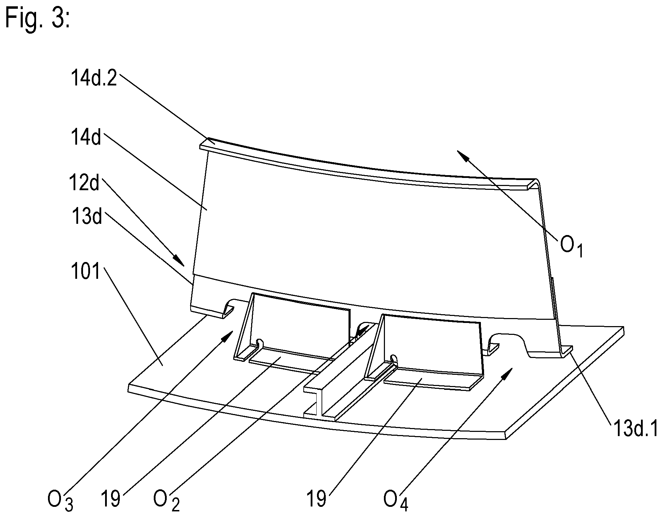

Figure 3 illustrates, likewise by showing a sector portion, a further possible design of an anti-sloshing wall 12d a tank according to an exemplary embodiment of the present invention may have. In this case, a frame 13d of the anti-sloshing wall 12d is spaced away from the skin 101 and fastened to it by means of clips 19, and the openings O₂, O₃ and O₄ are formed by respective clips between the skin 101 and the frame 13d.

Moreover, at its side facing the skin 101, the frame 13d has a stabilizing flange 13d.1 freely projecting into the interior space of the tank. Furthermore, also a wall portion 14d belonging to the anti-sloshing wall 12d and attached to the frame 13d comprises a stabilizing flange 14d.2 freely projecting into the interior space of the tank. In the instance shown, the stabilizing flange 14d.2 and the stabilizing flange 13d.1 of the frame 13d protrude at opposite sides of the anti-sloshing wall 12d. As is to be understood, the frame and/or the wall portion might additionally comprise a flange projecting into the interior space of the tank at the same side as the stabilizing flange 13d.1 does (not shown in Figure 3).

The anti-sloshing wall 12d is stabilized by clips 19 joined to both the skin 101 and the frame 13d belonging to the anti-sloshing wall 12d. As is to be noted, the stabilizing clips might further extend to the wall portion 14d and be joined thereto (not shown).

Disclosed is a tank for an aircraft 1000, the tank comprising two pressure bulkheads 11a, 11b which are connected to each other by a tank wall 15 which is at least partially formed by a portion of a skin 101 of the aircraft's fuselage 100. The tank 10 further comprises at least one anti-sloshing wall 12a, 12b, 12c, 12d (respectively) at least partially enclosing one or several opening/s O₁, O₂, O₃, O₄ and at least partially formed by a belonging frame 13a, 13b, 13c, 13d stabilizing said skin 101.

Further disclosed are a fuselage 100 comprising such tank, and an aircraft 1000 comprising such fuselage 100.

### References

10 tank
11a, 11b pressure bulkhead
12a, 12b, 12c, 12d anti-sloshing wall
13, 13a, 13b, 13c, 13d frame
13b.1, 13c.1 fastening flange
13b.2, 13c.2, 13d.1 stabilizing flange
14a, 14b, 14c, 14d wall portion
14d.2 stabilizing flange
15 tank wall
16 insulation layer
17 outer sheet
18 stringer
19 clip
20 engine
100 fuselage
101 skin
1000 aircraft
d diameter of opening
I interior space of the tank
O1, O₂, O₃, O₄ opening
P passengers' cabin
R rear space

## Claims

1. Fuel tank (10) for an aircraft (1000), the tank comprising two pressure bulkheads (11a, 11b) which are connected to each other by a tank wall (15) at least partially formed by a portion of a skin (101) of the aircraft's fuselage (100), and at least a belonging frame (13a, 13b, 13c, 13d) stabilizing said skin (101),
**characterised in that**
the tank (10) further comprises at least one anti-sloshing wall (12a, 12b, 12c, 12d) at least partially enclosing one or several opening/s (O₁, O₂, O₃, O₄) and at least partially formed by the belonging frame (13a, 13b, 13c, 13d) stabilizing said skin (101).

2. Fuel tank according to claim 1, wherein at least one of the openings (O₁, O₂, O₃, O₄)
- includes a circular area having a diameter (d) of at least 45cm, at least 50cm, or at least 60cm, and/or
- has a diameter of at most 80cm or at most 70cm or at most 65cm.

3. Fuel tank according to one of claims 1 or 2, wherein at least one of the opening/s (O₂, O₃, O₄) is configured as a clearance formed between the at least one anti-sloshing wall (12a, 12b, 12c, 12d) and said skin (101).

4. Fuel tank according to one of the preceding claims, wherein the at least one anti-sloshing wall (12a, 12b) is further formed by a belonging wall portion (14a, 14b, 14c, 14d) attached to said belonging frame (13a, 13b, 13c, 13d).

5. Fuel tank according to claim 4, wherein a ratio of a coefficient of thermal expansion of a material of the belonging frame (13a, 13b, 13c, 13d) divided by a coefficient of thermal expansion of a material of the belonging wall portion (14a, 14b, 14c, 14d) is within the range of 0.9 to 1.1 or even in the range of 0.95 to 1.05.

6. Fuel tank according to one of claims 4 or 5, wherein the belonging wall portion (14a, 14b, 14c, 14d) is attached to the belonging frame (13a, 13b, 13c, 13d) in a same way as the belonging frame (13a, 13b) is attached to said skin (101).

7. Fuel tank according to one of the preceding claims, wherein the at least one anti-sloshing wall comprises at least one flange (13b.2, 13c.2, 14d.2) freely projecting into an interior space (I) of the tank (10).

8. Fuel tank according to one of the preceding claims, wherein the at least one anti-sloshing wall (12c, 12d) is stabilized by means of at least one clip (19) joined to both the skin (101) and the frame (13c, 13d) belonging to the at least one anti-sloshing wall (12c, 12d).

9. Fuel tank according to claim 8, with the additional features of claim 4, wherein the at least one clip is further joined to the belonging wall portion of the at least one anti-sloshing wall.

10. Fuselage (100) for an aircraft (1000), the fuselage comprising a fuel tank (10) according one of the preceding claims.

11. Aircraft (1000) comprising a fuselage (100) according to claim 10.

## Patentansprüche

1. Kraftstofftank (10) für ein Flugzeug (1000), wobei der Tank zwei Druckschotten (11a, 11b) umfasst, die durch eine Tankwand (15), die zumindest teilweise durch einen Abschnitt einer Haut (101) des Rumpfs (100) des Flugzeugs gebildet wird, und mindestens einen zugehörigen Rahmen (13a, 13b, 13c, 13d), der die Haut (101) stabilisiert, verbunden sind,
**dadurch gekennzeichnet, dass**
der Tank (10) ferner mindestens eine Schwappschutzwand (12a, 12b, 12c, 12d) umfasst, die zumindest teilweise eine oder mehrere Öffnung (en) (O₁, O₂, O₃, O₄) umschließt und zumindest teilweise durch den zugehörigen Rahmen (13a, 13b, 13c, 13d), der die Haut (101) stabilisiert, gebildet wird.

2. Kraftstofftank nach Anspruch 1, wobei mindestens eine der Öffnungen (O₁, O₂, O₃, O₄)
- eine kreisförmige Fläche einschließt, die einen Durchmesser (d) von mindestens 45 cm, mindestens 50 cm oder mindestens 60 cm aufweist, und/oder
- einen Durchmesser von höchstens 80 cm oder höchstens 70 cm oder höchstens 65 cm aufweist.

3. Kraftstofftank nach einem der Ansprüche 1 oder 2, wobei mindestens eine der Öffnung (en) (O₁, O₂, O₃, O₄) als ein Freiraum konfiguriert ist, der zwischen der mindestens einen Schwappschutzwand (12a, 12b, 12c, 12d) und der Haut (101) geformt ist.

4. Kraftstofftank nach einem der vorhergehenden Ansprüche, wobei die mindestens eine Schwappschutzwand (12a, 12b) ferner durch einen zugehörigen Wandabschnitt (14a, 14b, 14c, 14d) gebildet wird, der an dem zugehörigen Rahmen 13a, 13b, 13c, 13d) befestigt ist.

5. Kraftstofftank nach Anspruch 4, wobei ein Verhältnis eines Wärmeausdehnungskoeffizienten eines Materials des zugehörigen Rahmens (13a, 13b, 13c, 13d), geteilt durch einen Wärmeausdehnungskoeffizienten des zugehörigen Wandabschnitts (14a, 14b, 14c, 14d), innerhalb des Bereichs von 0,9 bis 1,1 oder sogar in dem Bereich von 0,95 bis 1,05 liegt.

6. Kraftstofftank nach einem der Ansprüche 4 oder 5, wobei der zugehörige Wandabschnitt (14a, 14b, 14c, 14d) auf eine gleiche Weise an dem zugehörigen Rahmen (13a, 13b, 13c, 13d) befestigt ist, wie der zugehörige Rahmen (13a, 13b) an der Haut (101) befestigt ist.

7. Kraftstofftank nach einem der vorhergehenden Ansprüche, wobei die mindestens eine Schwappschutzwand mindestens einen Flansch (13b.2, 13c.2, 14d.2) umfasst, der frei in einen Innenraum (I) des Tanks (10) vorspringt.

8. Kraftstofftank nach einem der vorhergehenden Ansprüche, wobei die mindestens eine Schwappschutzwand (12c, 12d) mit Hilfe mindestens eines Beschlags (19) stabilisiert wird, die mit sowohl der Haut (101) als auch dem Rahmen (13c, 13d), der zu der mindestens einen Schwappschutzwand (12c, 12d) gehört, verbunden ist.

9. Kraftstofftank nach Anspruch 8, mit den zusätzlichen Merkmalen von Anspruch 4, wobei die mindestens eine Beschlag ferner mit dem zugehörigen Wandabschnitt der mindestens einen Schwappschutzwand verbunden ist.

10. Rumpf (100) für ein Flugzeug (1000), wobei der Rumpf einen Kraftstofftank (10) nach einem der vorhergehenden Ansprüche umfasst.

11. Flugzeug (1000), das einen Rumpf (100) nach Anspruch 10 umfasst.

## Revendications

1. Réservoir de carburant (10) pour un avion (1000), le réservoir comprenant deux cloisons de pressurisation (11a, 11b) qui sont connectées l'une à l'autre par une paroi de réservoir (15) au moins partiellement formée par une partie d'un revêtement (101) du fuselage de l'aéronef (100) et au moins un cadre qui en fait partie (13a, 13b, 13c, 13d) stabilisant ledit revêtement (101),
**caractérisé en ce que**
le réservoir (10) comprend en outre au moins une paroi anti-ballottement (12a, 12b, 12c, 12d) enfermant au moins partiellement une ou plusieurs ouverture(s) (O₁, O₂, O₃, O₄) et formée au moins partiellement par le cadre qui en fait partie (13a, 13b, 13c, 13d) stabilisant ledit revêtement (101).

2. Réservoir de carburant selon la revendication 1, dans lequel au moins une des ouvertures (O₁, O₂, O₃, O₄)
- inclut une zone circulaire ayant un diamètre (d) d'au moins 45 cm, d'au moins 50 cm ou d'au moins 60 cm, et/ou
- a un diamètre d'au plus 80 cm ou d'au plus 70 cm ou d'au plus 65 cm.

3. Réservoir de carburant selon l'une des revendications 1 ou 2, dans lequel au moins une des ouvertures (O₂, O₃, O₄) est configurée en tant qu'un dégagement formé entre l'au moins une paroi anti-ballottement (12a, 12b, 12c, 12d) et ledit revêtement (101).

4. Réservoir de carburant selon l'une des revendications précédentes, dans lequel l'au moins une paroi anti-ballottement (12a, 12b) est en outre formée par une partie de paroi qui en fait partie (14a, 14b, 14c, 14d) fixée audit cadre qui en fait partie (13a, 13b, 13c, 13d) .

5. Réservoir de carburant selon la revendication 4, dans lequel un rapport d'un coefficient d'expansion thermique d'un matériau du cadre qui en fait partie (13a, 13b, 13c, 13d) divisé par un coefficient d'expansion thermique d'un matériau de la partie de paroi qui en fait partie (14a, 14b, 14c, 14d) est situé dans la plage de 0,9 à 1,1 ou même dans la plage de 0,95 à 1,05.

6. Réservoir de carburant selon l'une des revendications 4 ou 5, dans lequel la partie de paroi qui en fait partie (14a, 14b, 14c, 14d) est fixée au cadre qui en fait partie (13a, 13b, 13c, 13d) de la même façon que le cadre qui en fait partie (13a, 13b) est fixé audit revêtement (101).

7. Réservoir de carburant selon l'une des revendications précédentes, dans lequel l'au moins une paroi anti-ballottement comprend au moins une bride (13b.2, 13c.2, 14d.2) en projection libre dans un espace intérieur (I) du réservoir (10).

8. Réservoir de carburant selon l'une des revendications précédentes, dans lequel l'au moins une paroi anti-ballottement (12c, 12d) est stabilisée au moyen d'au moins un clip (19) joint à la fois au revêtement (101) et au cadre (13c, 13d) appartenant à l'au moins une paroi anti-ballottement (12c, 12d).

9. Réservoir de carburant selon la revendication 8, avec les caractéristiques supplémentaires de la revendication 4, dans lequel l'au moins un clip est en outre joint à la partie de paroi qui en fait partie de l'au moins une paroi anti-ballottement.

10. Fuselage (100) pour un aéronef (1000), le fuselage comprenant un réservoir de carburant (10) selon l'une des revendications précédentes.

11. Avion (1000) comprenant un fuselage (100) selon la revendication 10.
